Europäisches Patentamt

European Patent Office

Office européen des brevets

(11) Veröffentlichungsnummer: **0 433 569 A1**

## (12) EUROPÄISCHE PATENTANMELDUNG

(21) Anmeldenummer: 90118004.2

(22) Anmeldetag: 19.09.90

(51) Int. Cl.5: **B62D 5/087**, B62D 6/00, B62D 101/00, B62D 121/00

(30) Priorität: 20.12.89 DE 3942096

(43) Veröffentlichungstag der Anmeldung: 26.06.91 Patentblatt 91/26

(84) Benannte Vertragsstaaten: DE FR GB IT

(71) Anmelder: ALFRED TEVES GmbH Guerickestrasse 7 Postfach 90 01 20 W-6000 Frankfurt am Main 90(DE)

(72) Erfinder: Kahrs, Manfred, Dr.
Auf der Ahl 93
W-6200 Wiesbaden(DE)
Erfinder: Beer, Wilhelm
Merowinger Ring 23
W-6090 Rüsselsheim 7(DE)
Erfinder: Baier, Joachim
Dahlienweg 4-6
W-6450 Hanau(DE)

(74) Vertreter: Grau, Ulf
c/o ALFRED TEVES GMBH Guerickestrasse 7
W-6000 Frankfurt (M) 90(DE)

(54) Hydraulische Hilfskraftlenkung für Kraftfahrzeuge.

(57) Es wird eine hydraulische Hilfskraftlenkung für Kraftfahrzeuge vorgeschlagen, bei welcher die hydraulische Unterstützung lediglich oberhalb einer vorgegeben Lenkkraft erfolgt, mit einem an eine mechanische Lenkung gekoppelten Arbeitszylinder (6), einer Pumpe (19) und mindestens einem Steuerventil (12), wobei eine durch die Lenkkraft bewirkte Verschiebung eines gegenüber dem Fahrzeugkörper verschiebbar gelagerten Bauteils (150) der mechanischen Lenkung entgegen einer Vorspannkraft der mechanischen Betätigung des Steuerventils (12) dient und wobei die Vorspannkraft in Abhängigkeit von fahrdynamischen Zustandsgrößen veränderbar ist.

Fig.1

## HYDRAULISCHE HILFSKRAFTLENKUNG FÜR KRAFTFAHRZEUGE

Die Erfindung betrifft eine hydraulische Hilfskraftlenkung für Kraftfahrzeuge, nach dem Oberbegriff des Anspruches 1.

Die deutsche Patentanmeldung P 38 43 893.3 zeigt eine Hilfskraftlenkung, welche sich vor allen Dingen zum Einsatz als Parklenkhilfe eignet, da die hydraulische Hilfskraft lenkmomentabhängig aktiviert wird. Man wird daher die Vorspannkraft, welche das durch die Lenkkraft verschiebbare Bauteil beaufschlagt, so wählen, daß die Verschiebung nur bei relativ hohen Lenkkräften, d.h. beim Parkvorgang, erfolgt. Die hydraulische Hilfskraft ist daher auch so hoch bemessen, daß der Verstärkungsfaktor bei höheren Geschwindigkeiten, bei welchen die auftretenden Lenkkräfte geringer sind, zu hoch wäre.

Aufgabe der Erfindung ist es eine gattungsgemäß Hilfskraftlenkung für Kraftfahrzeuge zu schaffen, welche für den Einsatz über den gesamten Geschwindigkeitsbereich des Kraftfahrzeuges geeignet ist. Diese Aufgabe wird erfindungsgemäß durch das kennzeichnende Merkmal des Anspruches 1 gelöst.

Gemäß einer bevorzugten Ausführungsform der Erfindung wird zur Erzeugung der Vorspannkraft ein gefesseltes Federelement eingesetzt, wodurch sich die Bewegung des relativ verschiebbaren Bauteils erst ab einer Mindestlenkkraft einstellen kann.

Eine veränderbare Vorspannkraft läßt sich auf besonders günstige Weise dadurch erreichen, daß das Federelement zweiteilig ausgeführt ist und daß die beiden Teile durch Stell mittel beaufschlagbar sind. Dabei läßt sich diese Beaufschlagung besonders einfach realisieren, wenn die Stellmittel zwischen beiden Federelementteilen angeordnet sind.

Einen besonders einfachen und kompakten Aufbau erhält man, wenn die Federelemente als Tellerfederpakete oder als elastomere Blöcke ausgebildet sind.

Weitere Vorteile sowie die Funktion der Erfindung ergeben sich aus der nachstehenden Beschreibung anhand eines Ausführungsbeispiels.

Hierzu zeigt:

Fig. 1    den hydraulischen Teil einer Hilfskraftlenkung einschließlich des gefesselten Federelementes und

Fig. 2    eine Ausführungsform des Stellantriebes zur Veränderung der Vorspannung des Federelementes.

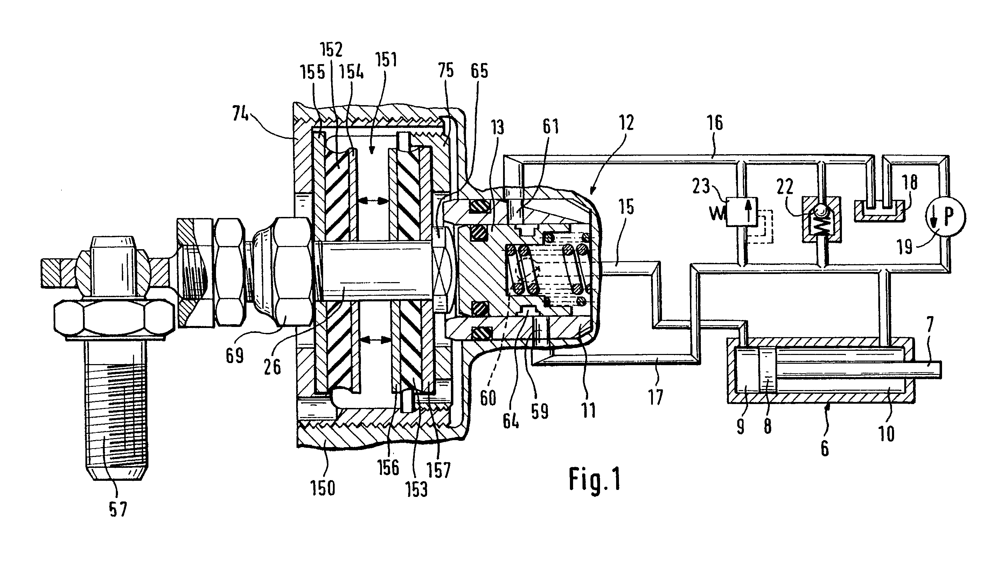

Die hydraulische Hilfskraftlenkung gemäß dem in Fig. 1 dargestellten Ausführungsbeispiel besteht aus einer nicht gezeigten mechanischen Lenkung, deren Lenkgetriebegehäuse 150 in Fahrzeugquerrichtung verschiebbar mit dem Fahrzeugaufbau verbunden ist. Die Spurstangenkräfte, welche während einer Lenkbetätigung auftreten, werden über das Lenkgetriebegehäuse 150, das gefesselte Federelement 151, den Reaktionsstab 26 und die mit letzterem gelenkig verbundene Schraube 57 am Fahrzeugaufbau abgestützt.

Die lenkkraftanhängige Relativverschiebung zwischen dem Lenkgetriebegehäuse 150 und dem Fahrzeugaufbau bewirkt eine Betätigung des Steuerschiebers 13, des Steuerventils 12. Der Steuerschieber 13 liegt unter leichte Vorspannung durch zwei Schraubenfedern mit einer Stirnseite am Kopfteil 65 des Reaktionsstabes 26 an.

Der Steuerschieber 13 weist eine Ringnut 64 auf und ist im Ventilgehäuse 11 gedichtet und verschiebbar gelagert, wobei das Ventilgehäuse 11 gedichtet mit dem Lenkgetriebegehäuse 151 verbunden ist. Das Ventilgehäuse 11 weist radial verlaufende Steuerbohrungen 59,60 und 61 auf, wobei die Verbindung dieser Steuerbohrungen untereinander durch die Stellung des Steuerschiebers 13 bzw. der Ringnut 64 bestimmt wird. Entlang der axialen Erstreckung des Ventilgehäuses 11 ist die Steuerbohrung 60 zwischen den beiden anderen Steuerbohrungen 59 und 61 angeordnet. Die Steuerbohrung 59 ist über die Verbindung 17 mit der Druckseite einer Pumpe 19 verbunden, an welche Verbindung auch die Arbeitskammer 10 des Arbeitszylinders 6 angeschlossen ist. Der Arbeitszylinder 6 ist als Differentialzylinder mit einem Kolben 8 und einer einseitig aus dem Zylinder heraus geführten Kolbenstange 7 ausgebildet, die Kolbenstange 7 besitzt einen Querschnitt, welcher fünzig Prozent des Querschnittes des Kolbens 8 beträgt. Somit ist die Beaufschlagungsfläche der Arbeitskammer 9, welche der kolbenstangenseitigen Arbeitskammerseite 10 gegenüberliegt, doppelt so groß wie die Beaufschlagungsfläche der Arbeitskammer 10.

Die Arbeitskammer 9 ist durch die Verbindung 15 mit der Steuerbohrung 60 verbunden. Die Verbindung 16 schließt den drucklosen Behälter 18 an die Steuerbohrung 61 an. Zwischen der Verbindung 17 und der Verbindung 16 ist ein Überdruckventil 23 angeordnet, welches im Falle eines Systemüberdrucks Druckmittel in den Behälter 18 abläßt; parallel zu dem Überdruckventil 23 ist ein Nachsaugventil 22 vorgesehen, welches als federbelastetes Rückschlagventil ausgeführt ist und die Strömungsrichtung zwischen der Leitung 17 und der Verbindung 16 sperrt. Das Nachsaugventil 22 dient dazu, Druckmittel in die Arbeitskammer 10 nachsaugen zu können, wenn die Fahrzeuglenkung ohne hydraulische Unterstützung stattfindet. Bei einer solchen Lenkungsbetätigung wird der mit dem Lenkgetriebegehäuse 151 verbundene Arbeitszylinder 6 (die Kolbenstange ist mit einer Spurstange verbunden) mechanisch, d.h. durch die Muskelkraft des Fahrers verschoben. Bei einer Lenkrichtung, bei welcher die Kolbenstange 7 im Arbeitszylinder 16 hineingeschoben wird, saugt die Kammer 10 über das Nachsaugventil Druckmittel aus dem Behälter 18.

Eine Lenkbetätigung ohne hydraulische Unterstützung findet dann statt, wenn die vom Fahrer über das mechanische Lenkgetriebe aufgebrachte Vorspannkraft kleiner ist als die Vorspannkraft des Federelementes 151. In diesem Falle findet keine Relativverschiebung zwischen dem Lenkgetriebegehäuse 150 und dem Fahrzeugaufbau bzw. dem Reaktionsstab 26 statt, wodurch der Steuerschieber 13 in seiner mittenzentrierten Lage bleibt. In dieser Position verbindet die Ringnut 64 die drei Steuerbohrungen 59,60,61 miteinander; außerdem sind die nicht dargestellten, durch den Steuerschieber 13 betätigbaren Schalter zum Aktivieren der Pumpe 19 geöffnet, so daß die Pumpe 19 ausgeschaltet ist.

Die Schwelle der Spurstangenkraft, ab welcher eine hydraulische Unterstützung einsetzt, wird durch die Vorspannung des Federelementes 151 bestimmt, welches zwischen dem Kopfteil 65 und der Einstellmutter 69 auf dem Reaktionsstab 26 und durch die beiden miteinander verschraubten Gehäuseteile 74 und 75 im Lenkgetriebegehäuse 150 gefesselt gelagert ist.

Das Federelement 151 ist zweiteilig ausgeführt und besteht aus zwei elastomeren Blöcken 151 und 153, die ringscheibenförmig ausgebildet sind und auf dem Reaktionsstab 26 innerhalb der Gehäuseteile 74 und 75 gelagert sind. Die elastischen Blöcke 152 und 153 sind jeweils an ihrer Stirnseite mit Ringplatten 154 und 155 bzw. 156 und 157 versehen. Die Ringplatte 155 des elastomeren Blockes 152 liegt mit ihrer freien Stirnseite an der Einstellmutter 69 und am Gehäuseteil 74 an, die Ringplatte 154 weist mit ihrer freien Stirnseite zur Ringplatte 156 des elastomeren Blockes 153, dessen andere Ringplatte 157 mit seiner freien Stirnfläche am Gehäuseteil 75 und am Kopfteil 65 des Reaktionsstabes 26 anliegt.

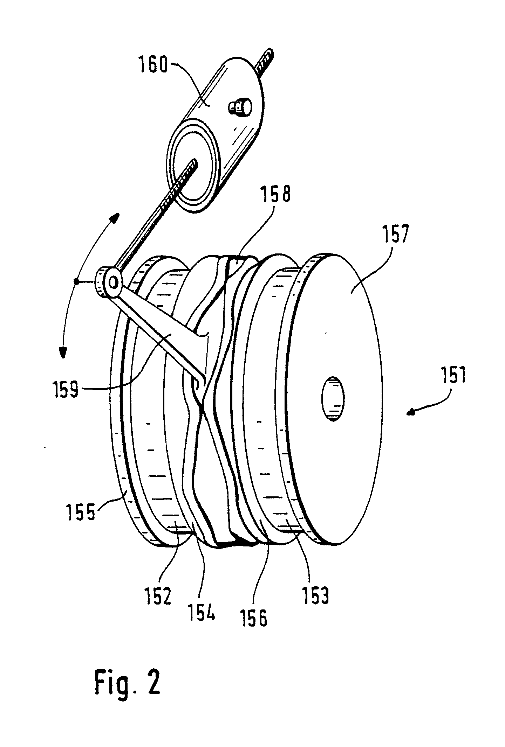

Die beiden einander zugewandten und beabstandeten Ringplatten 154 und 156 sind durch mechanische, hydraulische, pneumatische, elektromagnetische oder dergleichen Mittel beaufschlagbar, wodurch sich die Vorspannkraft des Federelementes 151 beeinflussen läßt. Ein mechanisches Stellmittel ist in Fig. 2 ausgeführt.

Fig. 2 zeigt eine mechanische Verstelleinrichtung zur Beaufschlagung der beiden elastomeren Blöcke 152 und 153, die als Rampenanordnung ausgebildet ist. Hierzu sind die einander zugewandten Stirnflächen der innenliegenden Ringplatten 154 und 156 mit einer umlaufenden zackenförmigen Verzahnung versehen; zwischen den beiden Ringplatten 154 und 156 ist ein verdrehbarer Stellring 158 angeordnet, dessen beide Stirnseiten jeweils eine der Verzahnung der Ringplatten 154 und 156 entsprechende Verzahnung aufweisen. Die Winkel der Zahnrampen liegen im Bereich der Selbsthemmung. Der Stellring 158 weist einen Arm 159 auf, welcher radial nach außen weist, und an dem ein Antrieb 160 in Form eines elektrischen Stellmotors mit einer Betätigungsspindel angreift. Der Antrieb wird in Abhängigkeit vom fahrdynamischen Parametern (beispielsweise Fahrzeuggeschwindigkeit, Lenkgeschwindigkeit, Querbeschleunigung etc.) betätigt, wodurch die innenliegenden Platten 154 und 156 mehr oder weniger stark auseinander gedrückt werden und sich die Federrate des Federelementes 151 verändert.

Steht das Fahrzeug bei einer Lenkbetätigung still oder ist die Geschwindigkeit sehr gering (Parksituation) so wird der Stellring 158 in eine Position bewegt, in welcher die Ringplatten 154 und 156 den geringstmöglichen Abstand zueinander haben. In diesem Fall ist die Federrate am geringsten. Bei höheren Geschwindigkeiten werden die Ringplatten 154 und 156 weiter auseinandergedrückt, wodurch ein höheres Lenkmoment zur Aktivierung der hydraulischen Unterstützung nötig wird. Die Grundeinstellung der Vorspannung des Federelementes 151 erfolgt mit eingesetztem Stellring durch die Einstellmutter 59 und die Verschraubung der beiden Gehäuseteile 74 und 75 ineinander. Die Mittenzentrierung des Steuerschiebers 13 erfolgt durch die Verschraubung des Gehäuseteils 74 im Lenkgetriebegehäuse 150.

Bezugszeichenliste

| 6  | Arbeitszylinder |
| 7  | Kolbenstange |
| 8  | Arbeitskolben |
| 9  | Arbeitskammer |
| 10 | Arbeitskammer |
| 11 | Gehäuse |
| 12 | Steuerventil |
| 13 | Steuerschieber |
| 15 | Verbindung |
| 16 | Verbindung |
| 17 | Verbindung |
| 18 | Behälter |
| 19 | Pumpe |
| 22 | Nachsaugventil |
| 23 | Überdruckventil |
| 26 | Reaktionsstab |
| 57 | Schraube |
| 59 | Steuerbohrung |
| 60 | Steuerbohrung |
| 61 | Steuerbohrung |

| | |
|---|---|
| 64 | Ringnut |
| 65 | Kopfteil |
| 69 | Einstellmutter |
| 74 | Gehäuseteil |
| 75 | Gehäuseteil |
| 150 | Lenkgetriebegehäuse |
| 151 | Federelement |
| 152 | elastischer Block |
| 153 | elastischer Block |
| 154 | Ringplatte |
| 155 | Ringplatte |
| 156 | Ringplatte |
| 157 | Ringplatte |
| 158 | Stellring |
| 159 | Arm |
| 160 | Antrieb |

## Ansprüche

1. Hydraulische Hilfskraftlenkung für Kraftfahrzeuge, wobei die hydraulische Unterstützung lediglich oberhalb einer vorgegebenen Lenkkraft erfolgt, mit einem an eine mechanische Lenkung gekoppelten Arbeitszylinder, einer Pumpe und mindestens einem Steuerventil, wobei eine durch die Lenkkraft bewirkte Verschiebung eines gegenüber dem Fahrzeugkörper verschiebbar gelagerten Bauteils der mechanischen Lenkung entgegen einer Vorspannkraft der mechanischen Betätigung des Steuerventils dient, nach Hauptpatent (Patentanmeldung P 38 43 893.3), dadurch **gekennzeichnet,** daß die Vorspannkraft in Abhängigkeit von fahrdynamischen Zustandsgrößen veränderbar ist.

2. Hydraulische Hilfskraftlenkung nach Anspruch 1, dadurch **gekennzeichnet,** daß die Vorspannkraft durch ein gefesseltes Federelement (151) erzeugt wird.

3. Hydraulische Hilfskraftlenkung nach einem der vorhergehenden Ansprüche, dadurch **gekennzeichnet,** daß das Federelement (151) zweiteilig ausgeführt ist und daß die beiden Teile (152,153) durch Stellmittel (158) beaufschlagbar sind.

4. Hydraulische Hilfskraftlenkung nach Anspruch 3, dadurch **gekennzeichnet,** daß die Stellmittel (158) zwischen den beiden Teilen (152,153) des Federelementes (151) angeordnet sind.

5. Hydraulische Hilfskraftlenkung nach einem der vorhergehenden Ansprüche, dadurch **gekennzeichnet,** daß das Federelement als elastomerer Körper ausgeführt ist.

6. Hydraulische Hilfskraftlenkung nach einem der Ansprüche 1 bis 4, dadurch **gekennzeichnet,** daß das Federelement als Tellerfederpaket ausgeführt ist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 190 960   (PEUGEOT ET AL.)<br>* Zusammenfassung; Anspruch 5; Figur 6 *<br>— — — | 1 | B 62 D<br>5/087<br>B 62 D 6/00<br>B 62 D 101/00<br>B 62 D 121/00 |
| X | US-A-2 996 136   (NALLINGER ET AL.)<br>* Anspruch 1; Figuren *<br>— — — | 1 | |
| X | EP-A-0 249 315   (TRW CAM GEARS)<br>* Spalte 5, Zeilen 48 - 53; Figur 3 *<br>— — — | 1 | |
| Y | US-A-4 144 948   (SERGAY)<br>* Zusammenfassung; Figur 1 *<br>— — — | 1,5 | |
| Y | US-A-4 546 839   (NOGUCHI)<br>* Zusammenfassung; Figur 3 *<br>— — — | 1,5 | |
| A | DE-A-2 246 662   (PORSCHE)<br>* das ganze Dokument *<br>— — — | 1,5 | |
| A | EP-A-0 327 450   (PEUGEOT ET AL.)<br>* Zusammenfassung; Figur 2 *<br>— — — | 1,6 | RECHERCHIERTE SACHGEBIETE (Int. Cl.5) |
| D,P,A | DE-A-3 843 893   (TEVES)<br>* das ganze Dokument *<br>— — — — — | 1 | B 62 D |

Der vorliegende Recherchenbericht wurde für alle Patentansprüche erstellt

| Recherchenort | Abschlußdatum der Recherche | Prüfer |
|---|---|---|
| Berlin | 20 März 91 | KRIEGER P O |